Europäisches Patentamt

European Patent Office

Office européen des brevets

(11) Veröffentlichungsnummer: **0 103 649**
A1

## (12) EUROPÄISCHE PATENTANMELDUNG

(21) Anmeldenummer: 82108204.7

(22) Anmeldetag: 06.09.82

(51) Int. Cl.³: **B 23 D 21/04**
B 29 C 17/10

(43) Veröffentlichungstag der Anmeldung:
28.03.84 Patentblatt 84/13

(84) Benannte Vertragsstaaten:
AT BE CH DE FR GB IT LI LU NL SE

(71) Anmelder: Strasser G.J.
Hauptstrasse 4
CH-9215 Schönenberg a. Thur(CH)

(72) Erfinder: Strasser G.J.
Hauptstrasse 4
CH-9215 Schönenberg a. Thur(CH)

(54) Vorrichtung zum Schneiden und/oder Anfasen von Rundprofilen oder dergl.

(57) Vorrichtung zum Schneiden und Anfasen etc. von Profilen bei der zwei rotative Bewegungsabläufe in eine radiale umgesetzt werden. Dabei werden zwei Scheiben (7,8) durch zwei Rotoren (2,3) in eine Relativbewegung zueinander versetzt wodurch über eine Steuerkurve der Schneidstahl bzw. Anfasstahl in Richtung auf das zu durchtrennende Profil bewegt wird. Dazu wird auf einer Welle (1) ein lose angeordneter mittels einer Magnetkupplung (4) mit dem anderen Rotor (2), der fest mit der Welle (1) verbunden ist, ge- und entkuppelt, wobei der lose Rotor (3) einen geringfügig abweichenden Durchmesser als der andere besitzt. Die Rotoren (2,3) treiben zwei miteinander in axialer Richtung fest und in Umlaufrichtung verschieblich miteinander verbundene Scheiben (7,8) an, von denen die erstere eine Vorschubeinheit trägt, die von der zweiten über eine Steuerkurve in Richtung zu durchtrennendes Profil bewegt wird. Die Rückholung geschieht z.B. über Federn (16a). Durch das Auswechseln von Steuerkurven lassen sich verschiedene Bewegungsabläufe des Stahles, auch Stotterbewegungen, erzielen, ebenso durch Variation der Durchmesser von Rotoren (2,3) und Scheiben (7,8).

Schneid- und Anfasstähle können in getrennten oder einer Einheit untergebracht werden, mehrere Steuerkurven auch hintereinander.

Es können die verschiedensten Werkstoffe bearbeitet werden, besonders auch Kunststoffe, wie beispielsweise PVC, Polyolefine etc.

Fig. 2 (Schnitt A-A)

G.J.Strasser

Hauptstrasse 4
CH 9215 Schönenberg a.Thur

0103649

17.August 1982
82o8o1 P europ

Vorrichtung zum Schneiden und Anfasen von Rundprofilen oder dergl.

Die Erfindung bezieht sich auf eine Vorrichtung zum Schneiden und Anfasen auch Einstechen etc.von Rundprofilen,vorzugsweise von Voll- und / oder Hohlprofilen,wie Rohren etc.mit einer umlaufenden Schneideinrichtung die einen Vortrieb besitzt und beim Schneiden von extrudierten Profilen für die Dauer des Schneidvorganges mit dem zu schneidenden Profil mitfährt sowie mit Greifelementen für das Profil ausgerüstet ist.

Solche Schneidvorrichtungen sind an sich bekannt.Sie bestehen stets aus einer Schneid- und einer von dieser getrennt angeordneten und auch wirkenden Anfaseinrichtung,wovon die erstere zunächst das Profil an einer vorbestimmten Stelle durchtrennt und anschließend die Anfaseinrichtung in Tätigkeit tritt und die Trennstellen des Profiles mit einer Fase versieht.Zum Durchtrennen werden meistens Sägen,zum Anfasen Stähle verwendet.

Nachteilig ist bei den bekannten Vorrichtungen,daß die beim Schneidvorgang anfallenden Späne verhaspelt und in das Hohlprofil gezogen werden.Dort machen sich diese Späne äußerst störend bemerkbar,vor allem dann,wenn wenn das Hohlprofil als Wasser-,Gas-, oder dergl.Leitung eingesetzt werden soll und folglich zunächst einem umständlichen und daher aufwendigen Reinigungsvorgang unterworfen werden muß.

Man hat deshalb versucht,die Spanbildung durch Stottersteuerungen zu vermeiden,doch stand der Erfolg in keinerlei Verhältnis zum Aufwand.Sowohl die Schneidvorrichtung an sich als auch die vorgesehenen Stottersteuerungen sind aufwendig und besonders letztere sehr störanfällig in ihrer Mechanik,da sie viele bewegte Teile enthalten und kompliziert aufgebaut sind.

Es sind außerdem noch Handgeräte zum Schneiden und Anfasen vorhanden,die jedoch nur als Notbehelf,beispielsweise auf Baustellen benutzt werden,sie blieben bei der Betrachtung des Standes der Technik unberücksichtigt,da sie nicht in einer Extrusionslinie, beispielsweise bei der Erzeugung von Kunststoffrohren,einsetzbar und für industrielle Produktionseinrichtungen ungeeignet sind.Sie sind auch in ihrem Aufbau mit dem Erfindungsgegenstand nicht vergleichbar.

Der Erfindung liegt daher die Aufgabe zugrunde hier Abhilfe zu schaffen und die Nachteile der bekannten Einrichtungen dieser Art mit Sicherheit zu vermeiden und deren Aufbau zu vereinfachen indem weniger Teile,besonders weniger Verschleißteile,eingesetzt werden bei gleichzeitig einfacherem und robusterem Aufbau sowie dem Einbau eines auswechselbaren Schneidstahl bzw.Anfasstahl Vorschubes.

Erfindungsgemäß wird dies dadurch erreicht,daß zwei rotierende über zwei auf einer gemeinsamen Welle angeordneten und mit dieser kuppelbaren Rotoren angetriebene Scheiben vorgesehen sind,die axial miteinander unbeweglich,in Umlaufrichtung gegeneinander verschiebbar verbunden sind,ein Schneidstahl in der ersten Scheibe gelagert und über die zweite Scheibe mittels einer in einer mit dieser verbundenen Vorschubplatte in die eine Kurve geschnitten ist gesteuert wird.

Ein weiteres Merkmal der Erfindung liegt darin,daß entweder einer der Rotoren oder eine der Scheiben einen von dem anderen Rotor bzw. Scheibe abweichenden Durchmesser besitzt.

Vorteilhafterweise ist die Vorschubplatte auswechselbar an der zweiten Scheibe angeordnet.

Die Ausbildung der Steuerkurve selbst ist variabel und kann den jeweiligen Bedürfnissen angepasst werden.

Vorzugsweise ist die Steuerkurve schlitzförmig mit flacher, steiler,gewölbter oder treppenförmiger Steigung ausgebildet.

Vorteilhafterweise erfolgt das Rückholen der zweiten Scheibe aus deren Wirkstellung in die Ruhestellung mittels Federn u/o durch die Fliehkräfte der Schneid- u.Anfasstähle und Stahlhalter. Vorteilhafterweise erfolgt de Antrieb beide Scheiben über Riemen oder dergl.,wobei im Zuge der Rotation der ersten Scheibe die zweite die Vorschubbewegung des Schneid,bzw.Anfasstahles durch das Kuppeln beider Rotoren,von denen jeder einer Scheibe zugeordnet ist und einer der Rotoren,vorzugsweise derjenige der der zweiten Scheibe zugeordnet ist einen grösseren Durchmesser aufweist als der erste,aufgrund dieses Durchmesserunterschiedes in einer Relativbewegung die zweite Scheibe gegenüber der ersten vorlaufen lässt.

Vorteilhafterweise ist eine der Schneideinheit entsprechende Anfaseinheit der ersteren gegenüber in der Vorrichtung angeordnet.

Eine Ausführungsvariante sieht vor,daß Schneid- und Anfasstähle in einer Einheit angeordnet sind und durch zwei Steuerkurven in je einer Vorschubplatte in ihre Wirkstellung gesteuert werden.

Die durch die Erfindung erzielten Vorteile sind besonders darin zu sehen,daß die Schneid- und Anfasvorrichtung kompakt augebildet ist, wenig Teile aufweist,kaum Verschleiß unterworfen ist,beide Vorgänge,also Schneiden und Anfasen gleichzeitig oder nacheinander auszuführen in der Lage ist und die Bildung von Spänen und deren Ablagerung im Inneren des durchtrennten Hohlprofiles auf einfachere Weise verhindert,leicht gebaut ist und daher kleine Lagerrollen anstelle von großen Lagern üblicher Bauart besitzt und sowohl in der Herstellung als auch im Betrieb wirtschaftlich ist.

Die Erfindung ist zum besseren Verständnis anhand eines in den Abbildungen dargestellten Ausführungsbeispieles näher erläutert. Es zeigt:

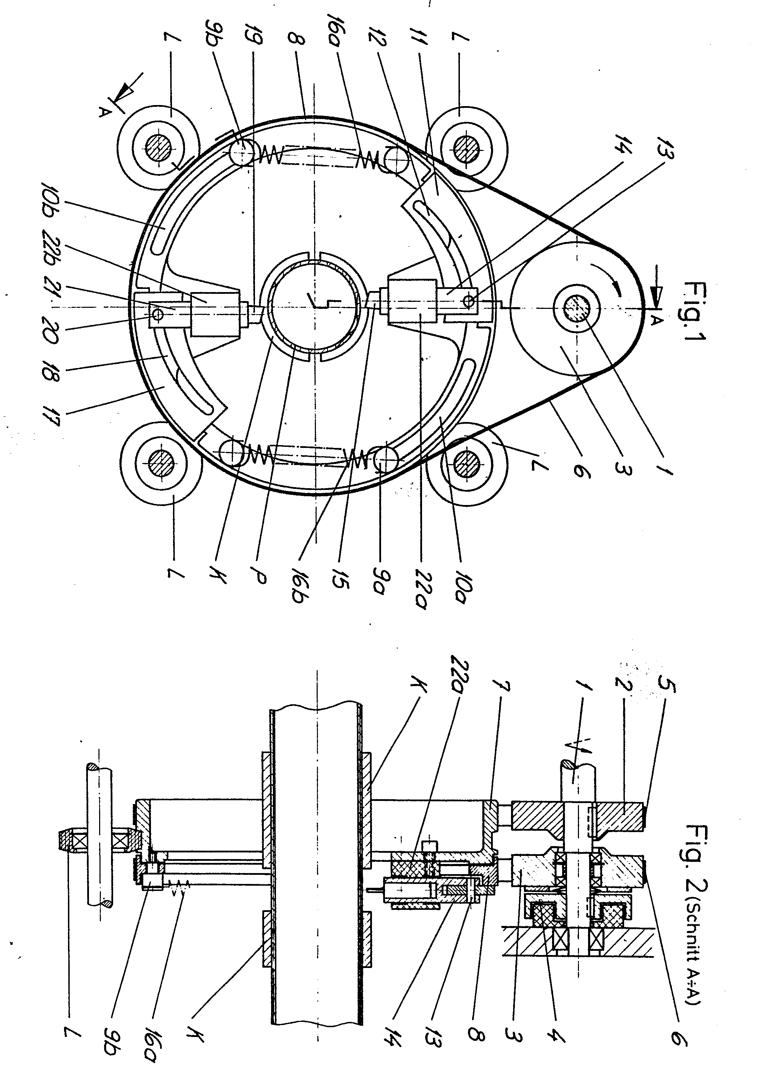

Fig.1    eine schematische Frontansicht der erfindungsgemäßen Vorrichtung

Fig.2    einen Schnitt durch Fig.1 in Richtung A - A

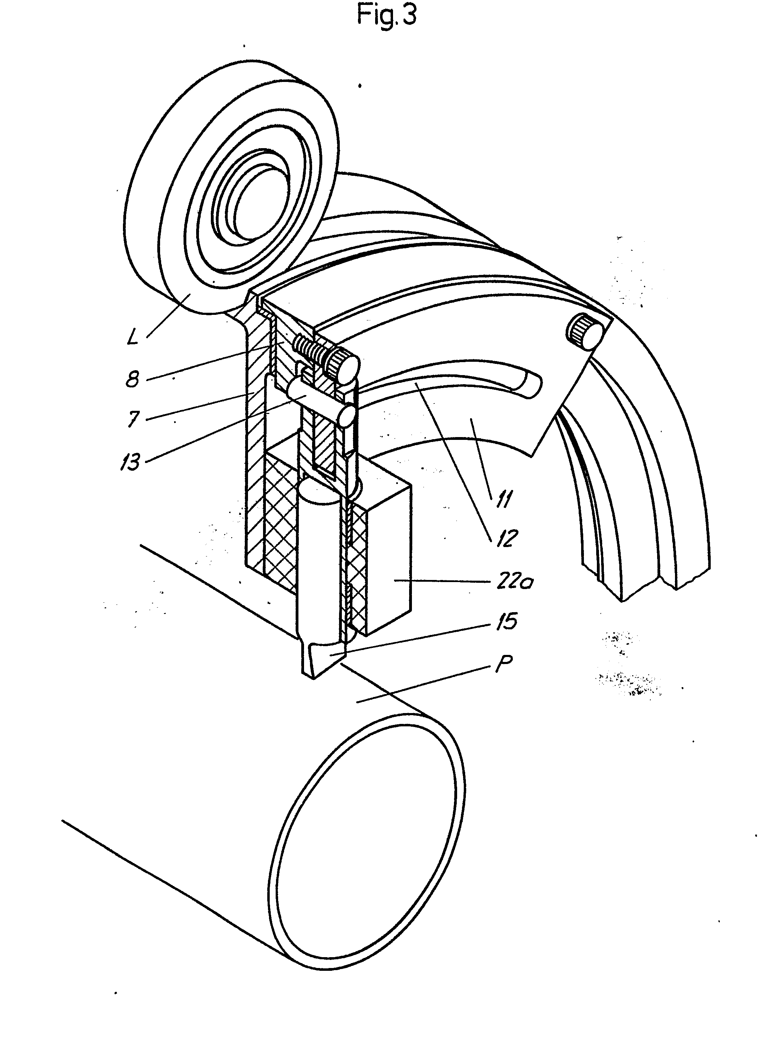

Fig.3    eine perspektivische Darstellung der Fig.1u.2 in Ruhestellung und

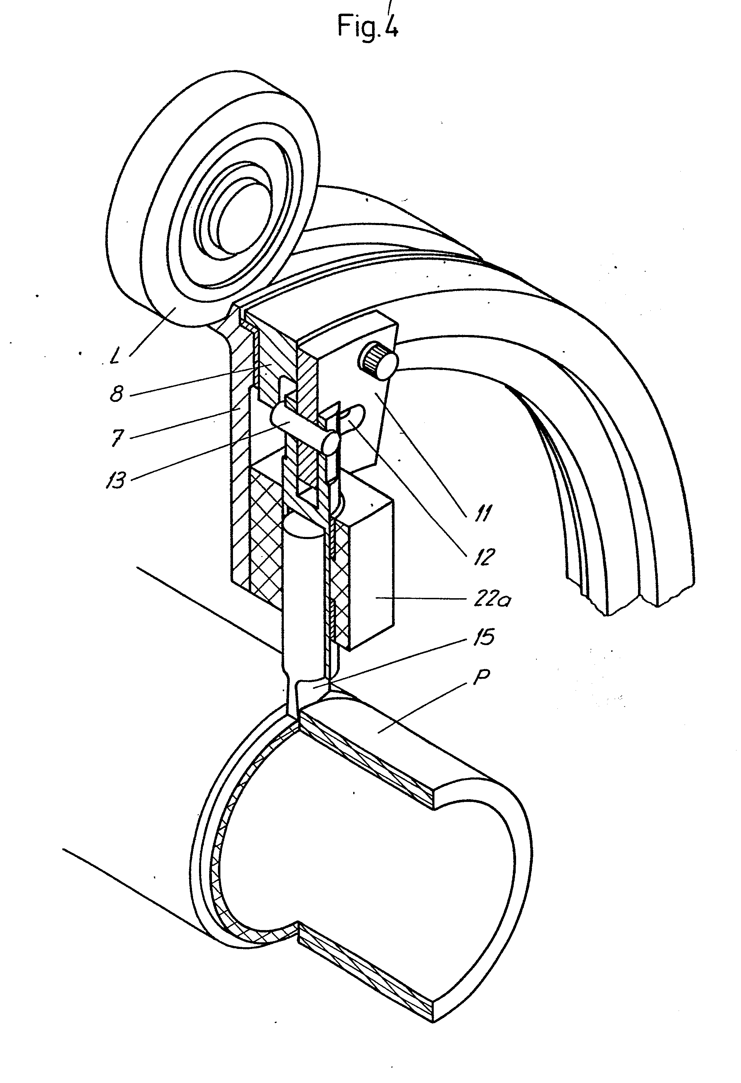

Fig.4    eine perspektivische Darstellung der Fig.1u.2 in Wirkstellung.

In den Abbildungen ist die Vorrichtung zum Schneiden und Anfasen von Profilen,vorzugsweise Hohlprofilen,dargestellt,die im Wesentlichen aus der Antriebswelle 1 mit dem darauf fest angeordneten Rotor 2,dem darauf lose angeordneten Rotor 3,der jedoch durch die Magnetkupplung 4 mit der Antriebswelle 1 gekuppelt werden kann,den beiden Antriebsriemen 5 und 6 welche den beiden Rotoren 2 und 3 zugeordnet sind und den beiden Scheiben 7 und 8 von denen die Scheibe 7 dem Rotor 2 und die Scheibe 8 dem Rotor 3 zugeordnet ist,besteht.Die beiden Rotoren 2 und 3 weisen unterschiedliche Durchmesser auf,oder aber,wenn diese im Durchmesser gleich sind,besitzen die beiden Scheiben unterschiedliche Durchmesser,woraus unterschiedliche Drehgeschwindigkeiten der beiden Scheiben 7 und 8 resultieren.

Die erste Scheibe 7 ist mit der zweiten Scheibe 8 derart verbunden,daß beide in axialer Richtung unbeweglich aneinander gebunden sind,in Umlaufrichtung dagegen gegeneinander verdrehbar sind.Die axiale Verriegelung beider Scheiben 7 und 8 geschieht durch Bolzen 9 (9a und 9b), während die gegenseitige Verschiebbarkeit in Umdrehungsrichtung durch die Schlitze 1o (1oa und 1ob) in der Scheibe 8 erzielt wird und der radiale Vorschub mittels eines in einer Vorschubplatte 11,durch dessen Steuerkurve 12 geführten Stiftes 13,gewährleistet ist,wobei der Stift 13 fest mit dem Stahlhalter 14 verbunden ist und damit diesen in die von der Steuerkurve 12 vorgegebene Richtung auf das zu bearbeitende Profil P zu schiebt worauf der Schneidstahl 15 letzteres durchtrennt.

Die Relativbewegung der beiden Scheiben 7 und 8 gegeneinander wird eingeleitet durch das ankuppeln des Rotors 3 auf die Antriebswelle 1,wobei (kleineren)
der Rotor 3 einen grösseren Durchmesser als der Rotor 2 besitzt
weshalb zwar die Rotoren gleich schnell laufen,jedoch nicht die Scheiben,
also läuft die Scheibe 8 schneller ( langsamer)als die Scheibe 7
um,was eine Relativbewegung beider Scheiben gegeneinander in Umlaufrichtung bewirkt wodurch der Schneidstahl 15 auf und in der Folge in die Wand des Profiles P gedrückt wird.Nachdem der Schneidstahl seine Wirkstellung erreicht hat ind der Schneidvorgang beendet
ist wird der Schneidstahlhater 14 mitsamt der Scheibe 8 wieder über
die Federn16 zurück in seine Ruhelage geholt,da die beiden Rotoren
2 und 3 durch die Magnetkupplung 4 nicht mehr über sie Antriebswelle 1 miteinander verbunden sind.

Das Anfasen des durchtrennten Profils P geschieht mittels einer entsprechend aufgebauten Anfaseinrichtung,die im Ausführungsbeispiel in
der gleichen Vorrichtung um 180 $^{\circ}$ gegenüber der Schneideinrichtung
versetzt angeordnet ist.Diese Anfaseinrichtung besitzt eine Vorschubplatte 17 mit einer Steuerkurve 18;dabei steuert diese den Anfasstahl
19 über den Stift 2o.Mit 21 ist der Anfasstahlhalter bezeichnet.

Die Lager der Vorrichtung sind mit einfachenLagerrollen L bestückt,
was wegen der kompakten,leichten Bauweise der Vorrichtung möglich ist.
Die Klemmbacken K für das Profil P sowie die Lagerrollen sind bekannte
Elemente des Maschinenbaus und als solche nicht erfindungswesentlich.
Außerdem sind noch Endschalter bzw.Lichtschranken oder dergl.vorgesehen um den Schneid- bzw. Anfasstahl in seiner Wirkstellung,nach erfolgter Durchtrennung des Profiles P abzutasten und den Rückholvorgang
in die Ruhestellung einzuleiten,auch dies sind bekannte Elemente der
Steuerungstechnik und deshalb nicht zur Erfindung gehörig ,aus Gründen
einer grösseren Übersichtlichkeit der Abbildungen sind sie auch in diesen nicht dargestellt.
Ein Beispiel der Bewegungsabläufe möge den Erfindungsgegenstand verdeutlichen.Die erste Scheibe 7 läuft beispielsweise mit 6oo U/m,während
nach Ankuppeln des Rotors 3 an die Antriebswelle 1 die zweite Scheibe 8
eine Relativbewegung gegenüber der ersten Scheibe 7 von etwa + 2,1 mm/U
bei einer Durchmesserdifferenz der beiden Rotoren 2 und 3 (von Rotor 3 gegenüber Rotor 2 von etwa - o,24 mm bei einem Durchmesser des
Rotors 2 von etwa 16o mm und einem Scheibendurchmesser beider
Scheiben 7 und 8 von etwa 445 mm)ausführt und der Schneidstahl
15 entsprechend der eingesetzten Steuerkurvenform 12 eine Bewegung senkrecht auf das zu durchtrennende Profil P zu von etwa
o,5 mm/U der Scheibe 7 durchführt(Maße geeignet für Polyolefine).

Beispielsweise können die beiden Schneid- und Anfasstähe 15,19
gleichzeitig oder nacheinander in ihre Wirkstellung gebracht werden ,Der Bewegungsablauf wird ebenfalls von den Form der Steuerkurven 12,18 besteimmt.Die Bewegungen der Stähle können,entsprechend
der Form der Steuerkurven gleichförmig oder unterschiedlich sein,es
kann beispielsweise der Schneidstahl 15 kontinuierlich wirken,während
der Anfasstahl 19 treppenförmig,also stotternd, seine Funktion aus
führt.

Wird beispielsweise nur eine Einheit für Schneiden und Anfasen des
Profiles P vorgesehen,so sind zwei Vorschubplatten hintereinander an
der Scheibe 8 angebracht.Es können auch mehrere Stähle durch die Anordnung einer entsprechenden Anzahl Vorschubplatten mit ggf.unterschiedlichen Steuerkurven vorgesehen werden und dies hinter-,in- oder auch
nebeneinander.

Die Lagerung der Stahlhalter 14,21 an der Scheibe 7 kann entweder
mittels eines gesonderten Trägers 22 a,b geschehen oder auch,bei besonderer
Formgebung der Scheibe 7 Teil,derselben sein.

Schließlich ist die Vorrichtung erfindungsgemäß nicht etwa auf das
Schneiden und Anfasen von Profilen beschränkt,sie kann beispielsweise
auch dazu benutzt werden um in die Oberfläche des Profiles P eine Wendel oder dergl.zu schneiden,etc.,was durch Einsatz besonderer Steuerkurven und/oder Durchmesserdifferenzen der Rotoren bzw.Scheiben erzielbar ist.Stets sind solche Wirkungen durch die Umsetzung zweier rotativer Bewegungen in eine radiale erreichbar.

Anstelle eines Schneid- oder Anfasstahles können auch derartige Scheiben vorgesehen werden.

Patentansprüche

1.Vorrichtung zum Schneiden und Anfasen,auch Einstechen etc. von Rundprofilen,vorzugsweise Hohlprofilen u./o.Vollprofilen,wie beispielsweise Rohren etc.mit einer umlaufenden Schneideinrichtung die einen Vortrieb besitzt und beim Schneiden von extrudierten Profilen für die Dauer des Schneidvorganges mit dem zu schneidenden Profil mitfährt sowie mit Greifelementen für das Profil ausgerüstet ist,dadurch gekennzeichnet,daß zur Umsetzung zweier rotativer Bewegungsabläufe in einen radialen zwei rotierende über zwei auf einer gemeinsamen Antriebswelle (1) angeordneten und mit dieser kuppelbare Rotoren (2) und (3) angetriebene Scheiben (7) und (8) vorgesehen sind,die in axialer Richtung miteinander fest in Umlaufrichtung gegeneinander verschiebbar verbunden sind,ein Schneid-bzw.Anfasstahl (15) in der ersten Scheibe (7) gelagert und über eine mit der zweiten Scheibe (8) verbundene Steuerkurve (12)in einer Vorschubplatte (11) gesteuert wird.

2.Vorrichtung nach Anspruch 1,dadurch gekennzeichnet,daß entweder einer der Rotoren (2),(3) oder eine der beiden Scheiben (7),(8) einen von dem anderen Rotor,bzw.der anderen Scheibe abweichenden Durchmesser aufweist.

3.Vorrichtung nach Anspruch 1 und 2,dadurch gekennzeichnet,daß die Vorschubplatte (11) auswechselbar an der zweiten Scheibe (8) angeordnet ist.

4.Vorrichtung nach Anspruch 1 bis 3,dadurch gekennzeichnet,daß die Ausbildung der Steuerkurve (12) variabel ist.

5.Vorrichtung nach Anspruch 1 und einem der folgenden,dadurch gekennzeichnet,daß das Rückholen der zweiten Scheibe (8) aus der Wirk- in die Ruhestellung mittels Federn (16) und/oder die Fliehkraft der Stahlhalter (14,21) und Stähle (15,19) erfolgt.

6.Vorrichtung nach Anspruch 1 und einem der folgenden,dadurch gekennzeichnet,daß die axiale Verriegelung der Scheiben (7) u. (8) mittels eines Bolzens (9) und die Verschiebbarkeit in Umfangrichtung durch einen Schlitz (1o) in der Scheibe (8) in der der Bolzen (9) gleitet,vorgenommen ist.

7.Vorrichtung nach Anspruch 1 und einen der folgenden,dadurch gekennzeichnet,daß eine der Schneideinheit entsprechende Anfaseinheit in der Vorrichtung gegenüber der ersteren angeordnet ist.

8.Vorrichtung nach Anspruch 1 und einen der folgenden,dadurch gekennzeichnet,daß Schneid- und Anfasstähle (15),( 9) in einer Einheit zusammengefasst sind und über zwei Steuerkurven (12),(18), die hintereinander geschaltet sind,gesteuert sind.

9.Vorrichtung nach Anspruch 1 und einen der folgenden,dadurch gekennzeichnet,daß der Antrieb beider Scheiben (7) und (8) über je einen Antriebsriemen (5) bzw.(6) erfolgt,der Antriebsriemen (5) dem Rotor (2),der mit der Antriebswelle (1) fest verbunden ist,und der Scheibe (7) zugeordnet ist,während der Antriebsriemen (6) dem einen etwas grösseren Durchmesser als der Rotor (2) aufweisenden Rotor (3),der lose auf der Antriebswelle angeordnet,jedoch über die Magnetkupplung (4) mit dieser kuppelbar ist,und der Scheibe (8) zu geordnet ist,die Scheibe (7) den Schneidstahl (15) trägt und mit der Scheibe (8) in axialer Richtung durch den Bolzen (9) fest verbunden,in Umfangrichtung dagegen durch den Schlitz (1o) in dem der Bolzen gleitend gelagert ist beweglich verbunden ist,beide Scheiben (7) und (8) gleichen Durchmesser aufweisen,die Scheibe (8) eine Vorschubplatte (11) mit einer Steurkurve (12) für den Schneidstahl(15) trägt und Rückholfedern(16) für die Scheibe (8) aus der Wirk-in die Ruhestellung vorgesehen sind,wobei die Steuerung der Magnetkupplung zum Start und Stop der Vorrichtung nach erfolgter Durchtrennung des Profiles P mittels einer Lichtschranke und /oder Endschaltern vorgesehen ist.

Fig.1

Fig. 2 (Schnitt A÷A)

Fig.3

Fig.4

0103649

L

8

7

13

11

12

22a

15

P

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | AT-B- 183 621 (DALMINE S.p.A.) * Ansprüche 1-5; Figuren 1, 2 * | 1-3 | B 23 D 21/04 B 29 C 17/10 |
| A | * Ansprüche 1-5; Figuren 1, 2 * | 4-9 | |
| A | DE-A-2 725 747 (W. LINDEMANN) * Ansprüche 1, 2; Figur * | 1,9 | |
| A | DE-A-2 539 844 (COMPACTOR BUSCHLE GMBH & CO. KG) | 1 | |
| A | DE-A-2 407 070 (RIDGE TOOL CO.) * Figuren 1-4 * | 1 | |
| A | DE-A-1 932 922 (LESIEUR-COTELLE S.A.) * Figur 2 * | 1 | RECHERCHIERTE SACHGEBIETE (Int. Cl. ³) |
| A | AU-B- 471 233 (A.Z. SANTANA) * Figuren 1-4 * | 1,9 | B 23 D 21/00 B 29 C 17/00 B 29 D 23/00 B 29 F 3/00 |
| A | Patent Abstracts of Japan, Band 4, Nr. 105, 26. Juli 1980, Seite 163M23 & JP-A-55-65048 | 1,9 | |
| A | FR-A-2 444 524 (METAL BOX LTD.) | | |

---  -/-

Der vorliegende Recherchenbericht wurde für alle Patentansprüche erstellt.

| Recherchenort BERLIN | Abschlußdatum der Recherche 22-04-1983 | Prüfer FINDELI B.F.C |
|---|---|---|

## Europäisches Patentamt
## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 724 859 (METZELER KAUTSCHUK AG) | | |
| A | DE-A-2 653 207 (PONT-A-MOUSSON S.A.) | | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| BERLIN | 22-04-1983 | FINDELI B.F.C |